# EUROPÄISCHE PATENTSCHRIFT

(11) **EP 3 702 739 B1**
(45) Veröffentlichungstag und Bekanntmachung des Hinweises auf die Patenterteilung: **28.04.2021**
(21) Anmeldenummer: 19160378.6
(22) Anmeldetag: 01.03.2019
(51) Int. Cl.: G01D 5/24, G01D 5/245, G01D 5/244, G01D 11/30

(54) **LAGERSCHILD UND POSITIONSMESSVORRICHTUNG MIT THERMISCHER POSITIONSSTABILITÄT**
BEARING SHIELD AND POSITION MEASURING DEVICE WITH THERMAL POSITIONAL STABILITY
FLASQUE DE PALIER ET DISPOSITIF DE MESURE DE POSITION À STABILITÉ THERMIQUE DE POSITION

(43) Veröffentlichungstag der Anmeldung: 02.09.2020
(73) Patentinhaber: Baumer Hübner GmbH, 10589 Berlin (DE)
(72) Erfinder: Otto, Kai-Hans, 12526 Berlin (DE)
(74) Vertreter: Strauss, Steffen

(56) Entgegenhaltungen:
- EP-A1- 3 174 183
- WO-A1-2018/210894
- DE-A1-102009 044 089
- DE-T2-602006 000 341
- US-A1- 2007 191 755

## Beschreibung

Die Erfindung betrifft einen Lagerschild zur Lagerung einer optischen Messeinrichtung nach dem Oberbegriff des Anspruchs 1 sowie eine optische Positionsmessvorrichtung nach Anspruch 14.

In der Praxis ist zu beobachten, dass verschiedene Maschinengehäuse und Lagersitze großen Temperaturänderungen ausgesetzt sind, gerade im Vergleich zwischen einer Stillstands- und einer Betriebssituation. Hieraus resultieren wiederum Formabweichungen der Gehäuse bzw. Lager. Um diesen Effekt besser handhaben zu können, wird beispielsweise durch die DE 10 2009 044 089 A1 ein Verfahren bzw. eine Vorrichtung zur gezielten Beeinflussung einer Formabweichung in einem Gehäuse vorgeschlagen. Dabei werden Schlitze im Innendurchmesser eines Flansches eingearbeitet, um die Ringsteifigkeit des Gehäuses und das Verhalten im Bereich der verschraubten Verbindungsstellen anzupassen.

Aus der Druckschrift DE 60 2006 000 341 T2 ist eine Lageranordnung mit einem nicht-drehenden Ring, einen nicht-drehenden Sensor, einen drehenden Ring, einen drehenden Codierer/Impulsgeber und wenigstens eine Reihe von Wälzkörpern bekannt, die zwischen zwei Lagerlaufflächen des nicht-drehenden und des drehenden Lagerrings angeordnet sind. Der Sensor ist an dem nicht-drehenden Ring befestigt und enthält ein Verbindungselement aus Kunststoff und einen Sensorblock, wobei das Verbindungselement an dem Sensorblock angefügt ist, um die Befestigung auf einer Seitenfläche des nicht-drehenden Teils sicherzustellen.

Aus der Druckschrift WO 2018/210894 A1 ist ein elektronisch kommutierter EC-Motor mit einem Polgehäuse, in dem ein Stator und ein Rotor aufgenommen ist und axial auf einer offenen Seite des Polgehäuses ein Steckergehäuse aus Kunststoff mit einem integrierten Anschluss-Stecker angeordnet ist, bekannt. Das Steckergehäuse ist hierbei über seinen gesamten Umfang von einem Metalldeckel umschlossen, der mit der offenen Seite des Polgehäuses mittels einer umlaufenden Laser-Schweissnaht dicht verschweisst ist, wobei radial innerhalb der Laser-Schweissnaht ein ununterbrochener umlaufender Metallring als Strahlschutz angeordnet ist, der im Strahlengang eines Lasers liegt, der beim Laserschweissen durch einen Fügespalt zwischen dem Polgehäuse und dem Metalldeckel in den Innenraum der elektrische Maschine eindringen kann.

Aufgabe der Erfindung ist es, einen Lagerschild zur Lagerung einer optischen Messeinrichtung vorzuschlagen, der eine verbesserte Wärmestabilität bieten kann.

Die Aufgabe wird, ausgehend von einem Lagerschild bzw. einer optischen Positionsmessvorrichtung der eingangs genannten Art, durch die kennzeichnenden Merkmale des Anspruchs 1 bzw. des Anspruchs 13 gelöst.

Durch die in den abhängigen Ansprüchen genannten Maßnahmen sind vorteilhafte Ausführungen und Weiterbildungen der Erfindung möglich.

Der erfindungsgemäße Lagerschild kann zur Lagerung einer optischen Messeinrichtung, wie zum Beispiel eines Drehgebers oder eines Drehwinkelgebers, verwendet werden. Bei einer derartigen Messeinrichtung kann es sich beispielsweise um ein optisches absolutes Messsystem handeln, welches typischerweise eine Lichtquelle in Form einer Leuchtdiode und ein Photoarray (etwa in Form eines Nonius-Position Data Processor) umfasst. In diesem Strahlengang wird bei der beschriebenen Ausführungsvariante eine rotierende Codescheibe positioniert, sodass die optischen Achsen zueinander fluchtend stehen. Die Codescheibe wird mit Blendenöffnungen (Aperturen) versehen, wobei die Anzahl bzw. Größe dieser Blendenöffnungen auch die Auflösung des Noniussystems bestimmt. Insofern kann bereits ein Positionsversatz in der Größenordnung weniger Mikrometer den maximal zulässigen Phasenversatz bedeuten, um eine bestimmte, vorgegebene Genauigkeit bei der Positionsbestimmung oder bei der Bestimmung der Frequenz noch erfüllen zu können. Ein derartiger Positionsversatz in der Größenordnung von Mikrometern kann jedoch bereits durch typische, im regulären Betrieb zu erwartende Temperaturänderungen an sich hervorgerufen werden.

Der erfindungsgemäß vorgeschlagene Lagerschild umfasst einen Flansch mit einer Öffnung zur Aufnahme einer Rotationsachse und zu deren Lagerung in einer axialen Richtung auf einer Mittelachse, insbesondere im Wesentlichen senkrecht zur Grundfläche des Lagerschilds. Die Rotationsachse des Objekts, dessen Rotationsfrequenz oder zeitabhängige Winkelposition bestimmt werden soll, kann in dieser Öffnung gelagert werden. Der Flansch umgibt dabei die Rotationsachse. Darüber hinaus ist der Lagerschild mit wenigstens zwei taschenförmigen Ausnehmungen versehen, die sich in ihrer Tiefe in axialer Richtung über einen Winkelbereich um die Mittelachse herum von weniger als 180° erstrecken. Durch die Verwendung taschenförmiger Ausnehmungen, welche zum Beispiel nur an einer Seite offen sind, können unter anderem Materialkosten eingespart werden.

Die taschenförmigen Ausnehmungen sind so angebracht, dass wenigstens zwei von ihnen aneinander angrenzen und dort eine Rippe ausgebildet ist und durch die Rippe voneinander getrennt sind. Sodann erstreckt sich diese Rippe von der Mittelachse aus gesehen in radialer Richtung. Die taschenförmigen Ausnehmungen besitzen zudem den Vorteil, dass bei einer Änderung der Temperatur im betriebsüblichen Rahmen geringere Formabweichungen auftreten als bei Verwendung von Bauteilen aus Vollmaterial, weil sich solche über den Umfang und in radialer Richtung gesehen entsprechend ihrer Länge auch stärker ausdehnen würden. Die Rippen wirken als Verbindungsstege und stabilisieren den Lagerschild gegen mechanische Belastungen.

Nun zeichnet sich der erfindungsgemäße Lagerschild dadurch aus, dass die Rippe bzw. zumindest einige oder auch alle vorkommenden Rippen mit einem Schlitz, der z.B. als Nut ausgebildet, versehen ist/sind, sodass die beiden aneinander angrenzenden taschenförmigen Ausnehmungen miteinander verbunden werden. Durch diese Aussparung in Form eines Schlitzes können thermische Ausdehnungseffekte weiter kompensiert werden, um eine besonders positionsstabile bzw. winkelpositionsstabile

Lagerung der optischen Messeinrichtung zu erzielen. Dadurch, dass auch die Rippen als noch verbliebene, in radialer Richtung verlaufende Strukturen unterbrochen sind, treten auch bei sich ändernden Temperaturbedingungen somit geringere Formabweichungen auf. Diese Maßnahme stellt sich insbesondere deshalb technisch als günstig heraus, weil der Lagerschild auch gleichzeitig zur Aufnahme der optischen Messeinrichtung dient und somit dessen Formstabilität auch unmittelbar zur Positionsstabilität der optischen Messeinrichtung beiträgt. Die Anbringung der Schlitze durch Unterbrechung der Rippen bietet den Vorteil, dass damit strukturell keine oder zumindest keine wesentliche Schwächung in mechanischer Hinsicht verbunden ist. Die Rippen erfüllen weiterhin ihre strukturelle Stabilisierungsfunktion. Da die Rippen in der Regel nicht bis zum äußeren Rand des Lagerschilds reichen, beeinflussen die Schlitze dann auch nicht die äußere Abdichtung des Lagerschildes.

Je nach Ausführungsform ist es nicht notwendig, und zuweilen auch nicht möglich, die gesamte optische Messeinrichtung innerhalb des Lagerschildes unterzubringen, sofern diese zum Beispiel auch noch elektronische Komponenten zur Signalaufbereitung oder dergleichen umfasst. Eine separate Elektronikkomponente wie eine Kontrollschaltung oder Auswerteschaltung ist in der Regel aber nicht empfindlich gegenüber geringeren mechanischen Einwirkungen und muss daher nicht unbedingt präzise positionsstabil gelagert werden, zumindest dann nicht, denn sie selbst kein optisches Signal aussendet oder empfängt. Deshalb ist es bei einer besonders bevorzugten Ausführungsform der Erfindung vorteilhaft, dass der Lagerschild eine Sensorausnehmung zur Aufnahme des Sensors der optischen Messeinrichtung aufweist, sodass der Sensor bzw. Sender und/oder Empfänger darin möglichst positionsstabil gelagert werden können. Der zu erwartende Messfehler kann somit weiter verbessert werden.

Insbesondere kann die taschenförmige Ausnehmung des Innenvolumens so ausgebildet sein, dass, mit Ausnahme von einer Seite, das Innenvolumen, welches sie ausbildet, vollständig umgeben wird. Die offen gebliebene Fläche, welche nicht von der taschenförmigen Ausnehmung begrenzt ist, kann im Wesentlichen senkrecht zur axialen Richtung stehen. Trotz der durch die Ausnehmung gegebenen Materialeinsparung stellen die taschenförmigen Ausnehmungen somit einen in sich möglichst geschlossenen Bereich dar; die taschenförmigen Ausnehmungen werden somit jeweils durch eine in sich geschlossene und nicht mit Löchern versehene Oberfläche gebildet, die immer noch ein sehr hohes Maß an mechanischer Stabilität bieten kann. Bedingt durch diese Struktur werden dennoch die thermischen Formänderungen reduziert.

In der Regel wird die Rotationsachse in der Mitte bzw. im Zentrum des Lagerschilds gelagert. Wird die Rotationsfrequenz, eine zeitlich sich ändernden Winkelposition oder dergleichen bestimmt, so kann der Sensor in vorteilhafter Weise radial versetzt zur Drehachse angeordnet werden, d.h. bei einer kompakten Ausführungsform des Lagerschilds gemäß der Erfindung ist die Sensorausnehmungen somit radial zu Mittelachse versetzt angeordnet.

Um bei den entsprechenden Temperaturänderungen möglichst geringe Formänderungen beobachten zu können, können die Rippen in Bezug auf die Öffnung zur Aufnahme der Rotationsachse bzw. in Bezug zu Mittelachse gegenüber der Sensorausnehmung möglichst auf der entgegengesetzten Seite angeordnet werden. Eine temperaturbedingte Formänderung verteilt sich sodann über einen möglichst großen Winkelbereich des Lagerschilds und beeinflusst die Position der Sensorausnehmung somit in geringem Maße. Im Allgemeinen ist in vorteilhafter Weise der Winkelbereich bzw. die Mitte des Winkelbereiches, in dem sich die Rippen befinden, auf der gegenüberliegenden Seite der Sensorausnehmung angeordnet. Die Optimierung kann dahingehend erfolgen, dass zum einen möglichst große taschenförmige Ausnehmungen gewählt werden, um Ausdehnungseffekte zu verkleinern, zum anderen können aber auch die Anzahl der Rippen und deren Anordnung so bestimmt sein, dass eine möglichst stabile mechanische Struktur besteht.

Darüber hinaus ist es vorteilhaft, wenn eine Ausführungsform des Lagerschilds gemäß der Erfindung symmetrisch in Bezug auf eine Achse ausgebildet ist, die:
- senkrecht durch die Mittelachse verläuft und
- zudem durch die Mitte der Sensorausnehmung verläuft.

Insofern kann auch die Anordnung der taschenförmigen Ausnehmungen und/oder der Rippen symmetrisch in Bezug auf diese Symmetrieachse erfolgen, sodass eine Formänderung nicht zu einer einseitigen Verlagerung führt. Sind gegenüber der Sensorausnehmung zum Beispiel zwei Rippen vorgesehen, so können diese eine taschenförmige Ausnehmung zwischen ihnen begrenzen, die genau der Sensorausnehmung gegenüberliegt. Diese Symmetrieeigenschaften führen auch dazu, dass beim Auftreten temperaturbedingter Formänderungen des Lagerschildes das Zentrum der Sensorausnehmung nicht oder möglichst gering verschoben wird.

Wird der Winkelbereich, in dem zwei Rippen, die auf der gegenüberliegenden Seite der Sensorausnehmungen liegen, vergleichsweise klein gewählt, etwa in einem Winkelbereich von weniger als 45°, vorzugsweise weniger als 30°, so wirken sich etwaige Formänderungen möglichst gering auf die Sensorausnehmung bzw. den darin angeordneten Sensor aus.

Um eine mechanisch gute stabilisierende Struktur bereitstellen zu können, kann die Rippe bzw. wenigstens eine der Rippen winkelmäßig um die Mittelachse zwischen 30° und 120°, insbesondere 90° zur Sensorausnehmung versetzt angeordnet sein. Auf diese Weise wird die Querrichtung zur Achse, die durch die Mittelachse und das Zentrum der Sensor Ausnehmungen verläuft, stabilisiert. Entsprechend können auch diese Rippen mit Schlitzen versehen sein. Dadurch werden aus einer thermischen Formänderung resultierende Effekte wiederum verringert.

Neben den bereits beschriebenen Maßnahmen zur Verringerung thermischer Formänderungen kann auch eine entsprechende Materialauswahl bei der Fertigung des Lagerschildes erfolgen. Außer vorteilhafter Eigenschaften wie geringe Korrosionsanfälligkeit, nichtmagnetische Eigenschaften usw. wird gemäß einem Ausführungsbeispiel darauf geachtet, dass ein möglichst niedriger Wärmeausdehnungskoeffizient vorliegt, um thermisch bedingte Formänderungen zu reduzieren. Einen hohen Wärmeausdehnungskoeffizienten besitzen verschiedene Edelstähle wie zum Beispiel austenitischer Edelstahl. Durch Wärmebehandlung (Abschrecken) wird im austentischen Stahl eine Martensitbildung bewirkt, wodurch sich kleine plattenförmige Gebilde in der Struktur des Stahls ausbilden. Der somit erhaltene martensitische Stahl zeichnet sich durch eine besonders hohe Festigkeit und einem geringen Wärmeausdehnungskoeffizienten aus.

Damit die Formstabilität auch homogen in der Struktur des Lagerschildes gewährleistet ist, kann wenigstens einer der Schlitze wenigstens 75 % der Tiefe einer der angrenzenden taschenförmigen Ausnehmungen aufweisen. Bei einem derartigen Ausführungsbeispiel der Erfindung wird somit in der Regel auch keine Verscherung des Lagerschilds bei größeren Temperaturänderungen zu beobachten sein.

In radialer Richtung soll die Strukturstabilität insgesamt gewährleistet sein, sodass demzufolge die Schlitze in der Regel nicht zu groß in radialer Richtung ausgebildet werden. Dennoch führt grundsätzlich ein breiterer Schlitz dazu, dass eine thermisch bedingte Formänderung stärker aufgefangen werden kann. Aus diesem Grunde ist es vorteilhaft, dass wenigstens einer der Schlitze in radialer Richtung mindestens 15 % bis 30 % der Länge der entsprechenden Rippe in radialer Richtung, vorzugsweise 20 % aufweist.

Um die Symmetrieeigenschaften trotz Anbringung der Schlitze nicht zu brechen, können vor allem die symmetrisch zueinander angeordneten Schlitze in vorteilhafter Weise gleich groß ausgebildet sein.

Ferner kann wenigstens einer der Schlitze bezogen auf die Mittelachse gegenüberliegend zur optischen Messeinrichtung bzw. zur Sensorausnehmung angeordnet sein und eine Tiefe aufweisen, die dem doppelten Wert seiner Breite entspricht. In Richtung der Mittelachse können also Formänderungen gleichmäßig aufgefangen werden, da die Tiefe des Schlitzes entsprechend groß gewählt ist, während in radialer Richtung der Schlitz eine geringere Breite aufweist als die Tiefe, wobei der Effekt einer Formänderung sich in radialer Richtung in der Regel geringer auf die Position des Sensors in der Sensorausnehmung auswirkt. Bei symmetrischer Anordnung können sich auftretende Ausdehnungseffekte auch kompensieren.

Dementsprechend zeichnet sich eine optische Positionsmessvorrichtung, die einer optischen Messeinrichtung wie ein Drehgeber oder ein Drehwinkelgeber umfasst, dadurch aus, dass eine Ausführungsform des erfindungsgemäßen Lagerschilds verwendet wird. Der entsprechende Sensor der optischen Messeinrichtung kann somit in Abhängigkeit der herrschenden Temperaturen positionsstabil gelagert werden. Zudem können mithilfe der entsprechenden Ausführungsbeispiele und Weiterbildungen die bereits vorgenannten Vorteile erreicht werden.

Bei der optischen Positionsmessvorrichtung gemäß einer Ausführungsvariante kann der Sensor eine Lichtquelle wie eine LED und/oder ein Photoarray zum Empfang des von der Lichtquelle ausgesandten Lichts umfassen. Die Codescheibe wiederum, die zur Messung verwendet wird, weist eine Winkelskala bzw. einen Nonius-Skala auf. Zu diesem Zweck weist die Codescheibe eine Folge von Blendenöffnungen, die sie durchdringen, auf. Ferner ist die Codescheibe zwischen Lichtquelle und dem Photoarray positioniert, sodass das von der Lichtquelle ausgesandte Licht auf die Codescheibe bzw. durch die Blendenöffnungen hindurch auf das Photoarray gelangen kann. Die Position der Codescheibe ist relativ zum Lagerschild bzw. zum Flansch messbar. Wenigstens eine der Komponenten, der Sensor bzw. die Lichtquelle bzw. das Photoarray, kann positionsstabil in der Sensorausnehmung platziert werden.

### Ausführungsbeispiel

Ein Ausführungsbeispiel der Erfindung ist in der Zeichnung dargestellt und wird nachstehend unter Angabe weiterer Einzelheiten und Vorteile näher erläutert. Im Einzelnen zeigt:

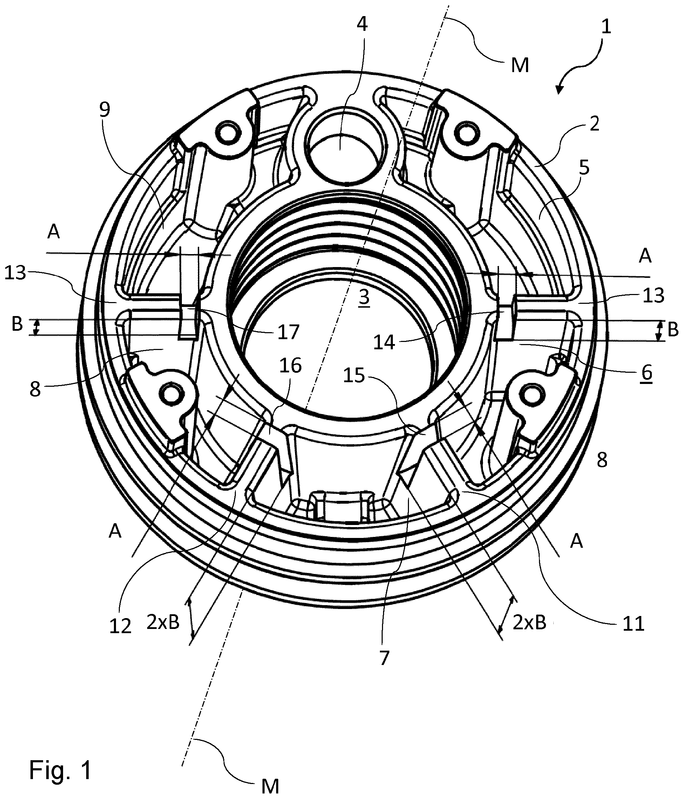

- Fig. 1:: einen Lagerschild gemäß der Erfindung.

Figur 1 zeigt einen Lagerschild 1 gemäß der Erfindung mit einem Flansch 2, wobei um die Mitte herum, durch welche eine Mittelachse M verläuft, eine Öffnung 3 zur Aufnahme Rotationsachse und deren Lagerung vorgesehen ist. Darüber hinaus ist radial zu dieser Öffnung 3 versetzt eine Sensorausnehmung 4 vorgesehen.

Außerdem umfasst der Lagerschild 1 um die Mittelachse M herum fünf taschenförmige Ausnehmungen 5, 6, 7, 8, 9, die jeweils durch Rippen 10, 11, 12, 13 voneinander getrennt sind. Die Rippen 10, 13 befinden sich in einer Position 90° versetzt zu beiden Seiten des Zentrums der Sensorausnehmung 4. Die Rippen 11, 12 sind zueinander in eine Winkelabstand von 60° und in Bezug auf die Mittelachse M auf der gegenüberliegenden Seite der Sensorausnehmung 4 angeordnet. Zur Sensorausnehmung 4 besitzen sie somit jeweils einen Winkelabstand von 150°.

Der Lagerschild 1 ist aus Druckgussaluminium gefertigt, da dieser Werkstoff einen hohen Wärmeausdehnungskoeffizienten besitzt und gut verarbeitet werden kann. Die thermisch bedingte Formänderung ist aufgrund der Materialauswahl also bereits reduziert. Zudem sind die radial verlaufenden Rippen 10, 11, 12, 13 jeweils an ihren radial innenliegenden Seiten mit einem Schlitz 14, 15, 16, 17 versehen.

Im vorliegenden Ausführungsbeispiel besitzen alle vier Schlitze 14, 15, 16, 17 in radialer Richtung die gleiche Breite A. Die in einem 90°-Winkel zur Sensorausnehmung 4 angeordneten Rippen 10, 13 sind nicht mit einer so tiefen Nut als Schlitz 14, 17 versehen wie die Rippen 11, 12. Die Schlitze 14, 17 sind mit einer Tiefe B nur halb so tief wie die Schlitze 15, 16 der Rippen 11, 12 mit einer Tiefe 2B. In Bezug auf die Sensorausnehmung 4 können durch die Schlitze 15, 16 stärkere Formänderungen aufgefangen werden, woraus sich deren größere Tiefe ableitet. Zudem besitzen die Rippen 10 ,13 eine größere strukturelle Bedeutung im Hinblick auf die mechanische Stabilisierung.

Allen Ausführungsbeispielen und Weiterbildungen der Erfindung ist gemeinsam, dass eine oder mehrere Rippen mit einem Schlitz bzw. einer Nut versehen sind, sodass die beiden aneinander angrenzenden taschenförmigen Ausnehmungen miteinander verbunden sind, um thermische Ausdehnungseffekte zu kompensieren und eine positionsstabile und/oder winkelpositionsstabile Lagerung der optischen Messeinrichtung zu erzielen.

## Patentansprüche

1. Lagerschild (1) zur Lagerung einer optischen Messeinrichtung, insbesondere eines Drehgebers und/oder eines Drehwinkelgebers, umfassend einen Flansch (2) mit einer Öffnung (3) zur Aufnahme einer Rotationsachse und deren Lagerung in einer axialen Richtung auf einer Mittelachse (M), insbesondere im Wesentlichen senkrecht zur Grundfläche des Lagerschilds (1), wobei der Flansch (2) die Rotationsachse umgibt und wenigstens zwei taschenförmige Ausnehmungen (5, 6, 7, 8, 9) aufweist, die sich in ihrer Tiefe in axialer Richtung und über einen Winkelbereich um die Mittelachse (M) herum von weniger als 180° erstrecken, wobei wenigstens zwei der taschenförmigen Ausnehmungen (5, 6, 7, 8, 9) aneinander angrenzen und im einander angrenzenden Bereich eine Rippe (10, 11, 12, 13) ausgebildet ist, die sich in radialer Richtung erstreckt und wenigstens zwei der taschenförmigen Ausnehmungen (5, 6, 7, 8, 9) durch die Rippe (10, 11, 12, 13) voneinander getrennt sind, **dadurch gekennzeichnet, dass** die Rippe (10, 11, 12, 13) mit einem Schlitz (14, 15, 16, 17) versehen ist, sodass die beiden aneinander angrenzenden taschenförmigen Ausnehmungen (5, 6, 7, 8, 9) miteinander verbunden sind, um thermische Ausdehnungseffekte zu kompensieren und eine positionsstabile und/oder winkelpositionsstabile Lagerung der optischen Messeinrichtung zu erzielen.

2. Lagerschild (1) nach Anspruch 1, **dadurch gekennzeichnet, dass** der Lagerschild (1) eine Sensorausnehmung (4) zur Aufnahme des Sensors der optischen Messeinrichtung aufweist.

3. Lagerschild (1) nach einem der vorgenannten Ansprüche, **dadurch gekennzeichnet, dass** die taschenförmigen Ausnehmungen (5, 6, 7, 8, 9) das Innenvolumen, das sie ausbilden, mit Ausnahme von einer Seite, vollständig umgeben, wobei insbesondere die Fläche, welche nicht von der taschenförmigen Ausnehmung (5, 6, 7, 8, 9) begrenzt ist, im Wesentlichen senkrecht zur axialen Richtung steht.

4. Lagerschild (1) nach Anspruch 2, **dadurch gekennzeichnet, dass** die Sensorausnehmung (4) radial versetzt zur Mittelachse (M) angeordnet ist.

5. Lagerschild (1) nach Anspruch 4, **dadurch gekennzeichnet, dass** die Rippe (10, 11, 12, 13) winkelmäßig um die Mittelachse (M) zwischen 30° und 120° , insbesondere 90° zur Sensorausnehmung (4) versetzt angeordnet ist.

6. Lagerschild (1) nach einem der Ansprüche 4 oder 5, **dadurch gekennzeichnet, dass** gegenüber der Sensorausnehmung (4) bezogen auf die Mittelachse (M) zwei Rippen (11, 12) vorgesehen sind, die eine taschenförmige Ausnehmung (7) begrenzen, die genau der Sensorausnehmung (4) gegenüberliegt.

7. Lagerschild (1) nach Anspruch 6, **dadurch gekennzeichnet, dass** der Winkelbereich, in dem die zwei Rippen (11, 12) liegen vorzugsweise weniger als 45°, besonders bevorzugt weniger als 30° um die Mittelachse (M) beträgt.

8. Lagerschild (1) nach einem der vorgenannten Ansprüche, **dadurch gekennzeichnet, dass** der Lagerschild (1) wenigstens teilweise, insbesondere vollständig aus Druckgussaluminium und/oder martensitischem Edelstahl gefertigt ist.

9. Lagerschild (1) nach einem der vorgenannten Ansprüche, **dadurch gekennzeichnet, dass** der Schlitz (14, 15, 16, 17) wenigstens 75% der Tiefe einer der angrenzenden taschenförmigen Ausnehmung (5, 6, 7, 8, 9) aufweist.

10. Lagerschild (1) nach einem der vorgenannten Ansprüche, **dadurch gekennzeichnet, dass** der Schlitz in radialer Richtung wenigstens 15% bis 30 % der Länge der entsprechenden Rippe in radialer Richtung, vorzugsweise 20% aufweist.

11. Lagerschild (1) nach einem der vorgenannten Ansprüche, **dadurch gekennzeichnet, dass** eine Breite (A) und eine Tiefe (B) des Schlitzes (14, 15, 16, 17) den gleichen Wert aufweisen.

12. Lagerschild (1) nach einem der Ansprüche 1 bis 10, **dadurch gekennzeichnet, dass** der Schlitz (14, 15, 16, 17) bezogen auf die Mittelachse (M) gegenüberliegend zu der optischen Messeinrichtung angeordnet ist und eine Tiefe (B) aufweist, die einem doppelten Wert der Breite (A) entspricht.

13. Lagerschild (1) nach einem der Ansprüche 6 bis 12 , **dadurch gekennzeichnet, dass** der Lagerschild (1) in Bezug auf eine Achse, die senkrecht zur Mittelachse (M) steht und durch die Mitte der Sensorausnehmung (4) verläuft, symmetrisch aufgebaut ist.

14. Optische Positionsmessvorrichtung, umfassend eine optische Messeinrichtung, insbesondere einen Drehgeber und/oder einen Drehwinkelgeber, mit einem Sensor, sowie ein Lagerschild (1) nach einem der vorgenannten Ansprüche.

15. Optische Positionsmessvorrichtung nach Anspruch 14, **dadurch gekennzeichnet, dass** der Sensor eine Lichtquelle, insbesondere eine Leuchtdiode, und/oder ein Photoarray zur Empfang des von der Lichtquelle ausgesandten Lichts umfasst, wobei eine Codescheibe vorgesehen ist, die eine Winkelskala und/oder Nonius-Skala aufweist, indem wenigstens eine Blendenöffnung in der Codescheibe angeordnet ist, wobei die Codescheibe zwischen der Lichtquelle und dem Photorarray angeordnet ist, sodass das von der Lichtquelle ausgesandt Licht auf die Codescheibe und/oder durch die Blendenöffnungen hindurch auf das Photoarray gelangen kann und die Position der Codescheibe relativ zum Lagerschild und/oder zum Flansch vermessbar ist, wobei insbesondere der Sensor und/oder die Lichtquelle und/oder das Photoarray in der Sensorausnehmung (4) angeordnet ist/sind.

## Claims

1. Bearing shield (1) for mounting an optical measuring device, in particular a rotary encoder and/or a rotary angle encoder, comprising a flange (2) with an opening (3) for receiving an axis of rotation and bearing it in an axial direction on a central axis (M), in particular essentially perpendicular to the base surface of the bearing shield (1), wherein the flange (2) surrounds the axis of rotation and has at least two pocket-shaped recesses (5, 6, 7, 8, 9) which extend in depth in the axial direction and over an angular range around the central axis (M) of less than 180°, wherein at least two of the pocket-shaped recesses (5, 6, 7, 8, 9) adjoin each other and a rib (10, 11, 12, 13) is formed in the adjoining region which extends in the radial direction and at least two of the pocket-shaped recesses (5, 6, 7, 8, 9) are separated from each other by the rib (10, 11, 12, 13), **characterized in that** the rib (10, 11, 12, 13) is provided with a slot (14, 15, 16, 17) so that the two adjacent pocket-shaped recesses (5, 6, 7, 8, 9) are connected to one another in order to compensate for thermal expansion effects and to achieve a positionally stable and/or angularly positionally stable mounting of the optical measuring device.

2. Bearing shield (1) according to claim 1, **characterized in that** the bearing shield (1) has a sensor recess (4) for receiving the sensor of the optical measuring device.

3. Bearing shield (1) according to one of the preceding claims, **characterized in that** the pocket-shaped recesses (5, 6, 7, 8, 9) completely surround the internal volume they form, with the exception of one side, in particular the surface which is not delimited by the pocket-shaped recess (5, 6, 7, 8, 9) being substantially perpendicular to the axial direction.

4. Bearing shield (1) according to claim 2, **characterized in that** the sensor recess (4) is arranged radially offset to the center axis (M).

5. Bearing shield (1) according to claim 4, **characterized in that** the rib (10, 11, 12, 13) is angularly offset about the central axis (M) by between 30° and 120°, in particular 90° to the sensor recess (4).

6. Bearing shield (1) according to one of claims 4 or 5, **characterized in that** two ribs (11, 12) are provided opposite the sensor recess (4) with respect to the center axis (M), which ribs delimit a pocket-shaped recess (7) that is exactly opposite the sensor recess (4).

7. Bearing shield (1) according to claim 6, **characterized in that** the angular range in which the two ribs (11, 12) lie is preferably less than 45°, particularly preferably less than 30° about the central axis (M).

8. Bearing shield (1) according to one of the preceding claims, **characterized in that** the bearing shield (1) is made at least partially, in particular completely, of die-cast aluminum and/or martensitic stainless steel.

9. Bearing shield (1) according to any of the preceding claims, **characterized in that** the slot (14, 15, 16, 17) has at least 75% of the depth of one of the adjacent pocket-shaped recesses (5, 6, 7, 8, 9).

10. Bearing shield (1) according to one of the preceding claims, **characterized in that** the slot in radial direction has at least 15% to 30% of the length of the corresponding rib in radial direction, preferably 20%.

11. Bearing shield (1) according to any one of the preceding claims, **characterized in that** a width (A) and a depth (B) of the slot (14, 15, 16, 17) have the same value.

12. Bearing shield (1) according to one of claims 1 to 10, **characterized in that** the slot (14, 15, 16, 17) is arranged opposite the optical measuring device with respect to the center axis (M) and has a depth (B) corresponding to a double value of the width (A).

13. Bearing shield (1) according to one of claims 6 to 12, **characterized in that** the bearing shield (1) is constructed symmetrically with respect to an axis which is perpendicular to the center axis (M) and passes through the center of the sensor recess (4).

14. Optical position measuring device, comprising an optical measuring device, in particular a rotary encoder and/or a rotary angle encoder, with a sensor, as well as a bearing shield (1) according to one of the preceding claims.

15. Optical position measuring device according to claim 14, **characterized in that** the sensor comprises a light source, in particular a light emitting diode, and/or a photo array for receiving the light emitted by the light source, wherein a code disk is provided which has an angular scale and/or Vernier scale by having at least one aperture opening arranged in the code disk, wherein the code disk is arranged between the light source and the photo array so that the light emitted by the light source can reach the code disk and/or the photo array through the aperture openings and the position of the code disk relative to the bearing shield and/or the flange can be measured, wherein in particular the sensor and/or the light source and/or the photo array is/are arranged in the sensor recess (4).

## Revendications

1. Flasque (1) destinée au palier d'un dispositif de mesure optique, en particulier d'un codeur et/ou d'un codeur angulaire, comprenant une bride (2) dotée d'une ouverture (3) destinée à recevoir un axe de rotation et son palier dans une direction axiale sur un axe central (M), en particulier essentiellement perpendiculaire à la surface de base de la flasque (1), la flasque (2) entourant l'axe de rotation et présentant au moins deux évidements en forme de poche (5, 6, 7, 8, 9), qui s'étendent dans leur profondeur dans la direction axiale et sur une zone angulaire autour de l'axe central (M) inférieure à 180°, au moins deux des évidements en forme de poche (5, 6, 7, 8, 9) étant adjacents et une nervure (10, 11, 12, 13) étant formée dans la zone adjacente, laquelle s'étend dans la direction radiale et au moins deux des évidements en forme de poche (5, 6, 7, 8, 9) étant séparés l'un de l'autre par la nervure (10, 11, 12, 13), **caractérisée en ce que** la nervure (10, 11, 12, 13) est pourvue d'une fente (14, 15, 16, 17) de telle sorte que les deux évidements en forme de poche adjacents (5, 6, 7, 8, 9) sont raccordés l'un à l'autre, afin de compenser des effets de dilatation thermique et d'obtenir un palier du dispositif de mesure optique à la position stable et/ou à la position angulaire stable.

2. Flasque (1) selon la revendication 1, **caractérisée en ce que** la flasque (1) présente un évidement de capteur (4) destiné à recevoir le capteur du dispositif de mesure optique.

3. Flasque (1) selon l'une des revendications précédentes, **caractérisée en ce que** les évidements en forme de poche (5, 6, 7, 8, 9) entourent entièrement le volume intérieur qu'ils forment, à l'exception d'un côté, en particulier la surface, qui n'est pas délimitée par l'évidement en forme de poche (5, 6, 7, 8, 9), étant essentiellement perpendiculaire à la direction axiale.

4. Flasque (1) selon la revendication 2, **caractérisée en ce que** l'évidement de capteur (4) est décalé radialement par rapport à l'axe central (M).

5. Flasque (1) selon la revendication 4, **caractérisée en ce que** la nervure (10, 11, 12, 13) est décalée de manière angulaire autour de l'axe central (M) entre 30° et 120°, en particulier à 90° par rapport à l'évidement du capteur (4).

6. Flasque (1) selon l'une des revendications 4 ou 5, **caractérisée en ce que** deux nervures (11, 12) sont prévues en face de l'évidement du capteur (4) par rapport à l'axe central (M), lesdites nervures délimitant un évidement en forme de poche (7) se trouvant exactement en face de l'évidement du capteur (4).

7. Flasque (1) selon la revendication 6, **caractérisée en ce que** la zone angulaire, dans laquelle se trouvent les deux nervures (11, 12), est de préférence inférieure à 45°, plus préférentiellement inférieure à 30° autour de l'axe central (M).

8. Flasque (1) selon l'une des revendications précédentes, **caractérisée en ce que** la flasque (1) est fabriquée au moins en partie, en particulier entièrement en aluminium moulé sous pression et/ou en acier inoxydable martensitique.

9. Flasque (1) selon l'une des revendications précédentes, **caractérisée en ce que** la fente (14, 15, 16, 17) représente au moins 75 % de la profondeur d'un évidement en forme de poche adjacent (5, 6, 7, 8, 9).

10. Flasque (1) selon l'une des revendications précédentes, **caractérisée en ce que** la fente dans la direction radiale représente au moins 15 % à 30 % de la longueur de la nervure correspondante dans la direction radiale, de préférence 20 %.

11. Flasque (1) selon l'une des revendications précédentes, **caractérisée en ce qu'**une largeur (A) et une profondeur (B) de la fente (14, 15, 16, 17) représentent la même valeur.

12. Flasque (1) selon l'une des revendications 1 à 10, **caractérisée en ce que** la fente (14, 15, 16, 17) est disposée par rapport à l'axe central (M) à l'opposé du dispositif de mesure optique et présente une profondeur (B) qui correspond à une valeur doublée de la largeur (A).

13. Flasque (1) selon l'une des revendications 6 à 12, **caractérisée en ce que** la flasque (1) présente une structure symétrique par rapport à un axe qui est perpendiculaire à l'axe central (M) et s'étend à travers le centre de l'évidement du capteur (4).

14. Dispositif de mesure de position optique, comprenant un dispositif de mesure optique, en particulier un codeur et/ou un codeur angulaire, avec un capteur, ainsi qu'une flasque (1) selon l'une des revendications précédentes.

15. Dispositif de mesure de position optique selon la revendication 14, **caractérisé en ce que** le capteur comprend une source de lumière, en particulier une diode électroluminescente, et/ou une barrette de diodes pour la réception de la lumière émise par la source de lumière, un disque de code étant prévu, lequel présente un rayon vecteur et/ou un vernier, dans lequel est disposée au moins une ouverture de diaphragme dans le disque de code, le disque de code étant disposé entre la source de lumière et la barrette de diodes de telle sorte que la lumière émise par la source de lumière peut parvenir sur le disque de code et/ou en passant par les ouvertures de diaphragme sur la barrette de diodes et la position du disque de code par rapport à la flasque et/ou à la bride est mesurable, en particulier le capteur et/ou la source de lumière et/ou la barrette de diodes étant disposés dans l'évidement de capteur (4).
